# EUROPEAN PATENT SPECIFICATION

(11) **EP 2 287 068 B1**
(45) Date of publication and mention of the grant of the patent: **05.10.2016**
(21) Application number: 10173595.9
(22) Date of filing: 20.08.2010
(51) Int. Cl.: B62J 15/02

(54) **Safety connection device for a bicycle mudguard**
Sicherheitsanschlussvorrichtung für ein Fahrradschutzblech
Dispositif de fixation sécurisée pour garde-boue de bicyclette

(30) Priority: 21.08.2009 NL 1037218
(43) Date of publication of application: 23.02.2011
(73) Proprietor: Curana Invest bvba, 8850 Ardooie (BE)
(72) Inventor: Vens, Dirk, 8800 Roeselare (BE)
(74) Representative: Ostyn, Frans

(56) References cited:
- EP-A1- 0 962 382
- EP-A1- 1 221 407
- EP-A1- 2 072 386
- EP-A2- 1 439 115
- EP-A2- 1 640 258
- DE-A1- 4 426 918
- DE-U1- 9 314 201
- GB-A- 191 010 116
- JP-U- 50 124 057
- NL-C2- 1 022 857
- US-A1- 2007 183 862

## Description

The present invention relates to a safety connection device comprising at least one supporting rod for a bicycle mudguard, a first connecting means forming part of or being fixedly attached to said supporting rod, and a second connecting means which forms part of or can be fixedly attached to a fixed component of the bicycle, said first and second connecting means being releasably connectable to one another such that the connection is automatically released when a force is exerted on the supporting rod, and being rotatable with respect to one another in the connected state.
The present invention also relates to a mudguard provided with at least one such safety connection device and a bicycle to which a mudguard is attached using at least one such safety connection device.

If, during cycling, an object is caught by the wheel or the tyre, this object can end up between the tyre and the mudguard or between a mudguard rod and the spokes. As a result thereof, the mudguard and the supporting mudguard rods will deform and co-rotate with the wheel until the entire combination is detained by the fork of the bicycle and the wheel is blocked. All of this happens very quickly and, as a result of the sudden blocking of the front wheel, the cyclist will in most cases crash and fall.

In order to prevent such dangerous situations, safety connection devices have been developed in the past which provide a detachable connection of the mudguard rods to the fork of the bicycle. These safety connection devices consist of connecting means which can be coupled and which detach when the detachment force exerted on them exceeds a certain threshold value. In the above-described situations where an object is entrained by the wheel or the tyre, a detachment force will be exerted on the coupled connecting means which will cause the mudguard connection to be disconnected. Consequently, the entrained object is freed, as a result of which the wheel can continue to rotate and is not blocked.

EP 0 962 382 B1, which is considered as the closest prior art, describes a safety connection device based on the above principle. This connection device consists of a first connecting means having a spherically rounded end section and a second connecting means which is provided with a complementary spherical insertion hole for this end section. The spherical end section can be placed in the insertion hole as a result of elastic deformation of the material. In other words, the connection is a click-fit connection. In the connected state, the connecting means form a ball-and-socket joint in which the end section is rotatably accommodated in the insertion hole, so that the connecting means are freely rotatably with respect to one another. This connection device is designed to be released at each mutual position of the connecting means if the detachment force exerted thereon exceeds a certain threshold value. In this context, the term detachment force is understood to mean a force which is exerted on one of the connected connecting means and is directed along the axis thereof, while the other connecting means is retained.

The other known safety connection devices for mudguards are also based on this principle of a click-fit connection which can be detached under the effect of a certain detachment force. Although these safety connectors are effective with regard to the safety of bicycles, they also cause a number of significant drawbacks.

One drawback of these known safety connection devices is the fact that they can also be uncoupled as a result of forces which do not cause a safety risk to the cyclist. Thus, if the mudguard rod accidentally becomes stuck on a component of an adjacent bicycle in a bicycle stand, this may already be sufficient to detach the connection. Also when a bicycle is transported in a car, it is often found that the pressure which is exerted on a mudguard rod leads to the detachment of the safety connector. The detached connecting means have to be coupled to one another again in each case by hand.

The fact that, when these click-fit connections are used, there inevitably has to be a slight clearance between the coupled parts forms another significant drawback, since this clearance renders the connection unstable, as a result of which the position of the mudguard with respect to the wheel is not sufficiently secure. This will cause the mudguard to easily vibrate during cycling and may even cause the mudguard to reach a position in which it touches the tyre. These drawbacks are very inconvenient to the bicycle user.

It is an object of the present invention to provide an efficient safety connection device for a bicycle mudguard which overcomes these inconvenient drawbacks. More particularly, it is an object to provide a safety connection device by means of which a stable connection can be achieved which does not easily become detached when the device becomes stuck or a pressure is exerted on it, but which does become detached when an object ends up between the tyre and the mudguard or between a mudguard rod and the spokes and is entrained by the tyre or the wheel, and which is therefore very reliable and efficient with regard to safety.

These objects are achieved by providing a safety connection device having the features indicated in the first paragraph of the present description, and in which the connected connecting means are non-releasably connected in a position of use and in each position which is rotated with respect to this position of use in which the connecting means are rotated with respect to one another through an angle (α) which is smaller than a certain release angle (β), and in that their connection is released automatically if the connecting means are rotated with respect to one another through an angle which is at least equal to this release angle (β), when the connection device is in use on a bicycle and an object ends up between the tyre and the mudguard or between a mudguard rod and the spokes and is entrained by the tyre or the wheel

If an object ends up between the tyre and the mudguard or between a supporting mudguard rod and the spokes, the mudguard rods will co-rotate with the wheel whereas the mudguard will be deformed. In order to prevent the wheel from eventually becoming blocked thereby and to prevent the cyclist from falling, the safety connection device according to the present invention ensures that the connection is automatically released when the co-rotating mudguard rod has reached or exceeded a certain rotation angle, the so-called release angle (β). As long as this rotation angle has not been reached, the connection remains in place as a non-releasable connection. In other words, this connection cannot become detached when a certain tensile force is exerted on the connection (as is the case with the existing safety connectors). This means that the connection is retained in the position of use and in a rotated position at a rotation angle which is smaller than said release angle, irrespective of the tensile force which is exerted thereon.

If a tensile force is exerted on the mudguard rod during displacement or transportation of a bicycle, this will usually not cause rotation of the mudguard rod, or only a small rotation (smaller than the release angle). In such non-dangerous situations, the connection will not become detached, even if the exerted tensile force is relatively large.

If the mudguard rod is rotated to a position where the release angle has been reached or exceeded, the connection does become detached. This will only occur in the dangerous situation where an object has ended up between the tyre and the mudguard or between a mudguard rod and the spokes and causes the mudguard rod to co-rotate. When the release angle has been reached or exceeded, the mudguard rod can be displaced freely. In that case, a very small displacement force is sufficient to detach the connecting means from one another and to free the entrained object, as a result of which the wheel can continue to rotate and is no longer blocked. Therefore, such a safety connection device is very reliable and efficient.

As the safety connection device does not use any click-fit connections, it can be designed to have a smaller clearance between the coupled parts and offers an improved stability compared to the known safety connectors.

The connecting means are preferably designed such that they form a pivoting knee joint when the connecting means are in the connected state. The area inside which the connecting means are rotatable with respect to one another is in this case limited by the fact that a limit position of the rotatable connecting means has been determined. The connecting means can then only rotate in an area which is situated on one side of this limit position. In a particular embodiment, this limit position is also the position of use and the mudguard rod can only be rotated from this limit position according to the direction of rotation of the wheel when the bicycle is moving forward.

In a preferred embodiment, the connecting means are designed such that, in the connected state, they can only be rotated about an axis of rotation which is at right angles to the axis of the supporting rod. By limiting the freedom of movement of the coupled connecting means to a rotation about a single axis of rotation, the stability of the connection can be improved further. In a particular embodiment of the safety connection device according to the present invention, the one connecting means comprises a coupling body, while the other connecting means comprises a recess in which the coupling body can be accommodated and can be retained, and the coupling body and the recess are designed such that they have to be rotated with respect to one another in one direction of rotation in order to be able to place the coupling body in the recess, while they have to be rotated with respect to one another in the other direction of rotation in order to remove the coupling body from this recess again.

Such a connection is particularly suitable for constructing a safety connection device which is automatically released at a specific rotation angle (β).

In a highly preferred embodiment, the recess and the coupling body are formed such that at least one wall section of the recess on the one hand prevents the coupling body introduced therein from being removed from the recess according to a direction at right angles to the axis of the rod, and on the other hand prevents the coupling body from being displaced according to the direction of this axis.

In a particular embodiment, the one connecting means comprises two parallel flank sections with an intermediate space which accommodates the coupling body, while the other connecting means extends inside this intermediate space and the coupling body is accommodated in the recess of this other connecting means.

In order to prevent the mudguard rod from being rotated under the effect of relatively small forces, the connecting means may be provided with blocking means in order to prevent rotation of the connecting means with respect to one another in their position of use and in order to allow this rotation only when the moment of force applied to the connecting means has exceeded a certain threshold value.

In a very preferred embodiment said fixed component is the fork of the bicycle.

Furthermore, the present invention also relates to a mudguard for a bicycle, comprising a mudguard body, characterized by the fact that the mudguard comprises a safety connection device according to the present invention.

The advantages of such a mudguard are sufficiently evident from what has been described above in relation to the safety connection device according to the present invention.

Furthermore, the present invention also relates to a bicycle comprising a mudguard which is connected to a fixed component of the bicycle by means of a safety connection device according to the present invention.

In order to further explain and indicate these and other features and particulars of the present invention, a more detailed description of a number of embodiments of the safety connection device for the supporting rods of a bicycle mudguard is now given below. It will be clear that nothing in the description which follows may be interpreted as a restriction to the scope of protection for the present invention as laid down in the claims.

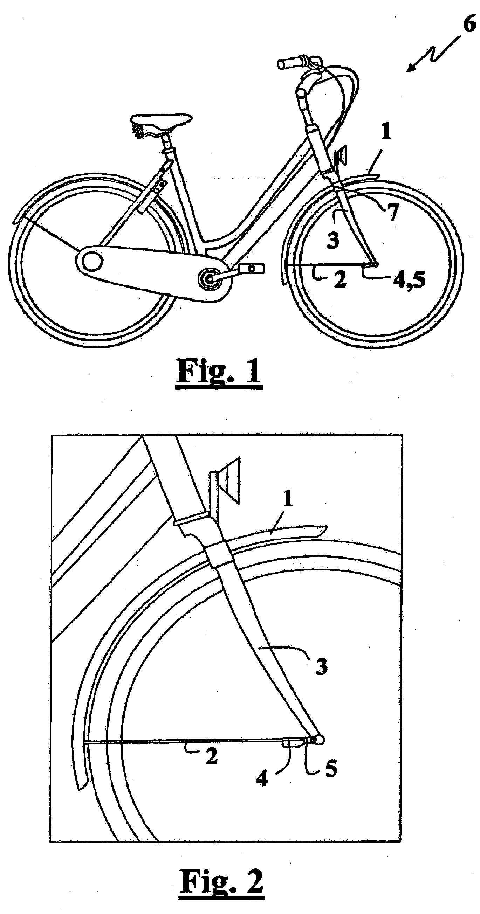

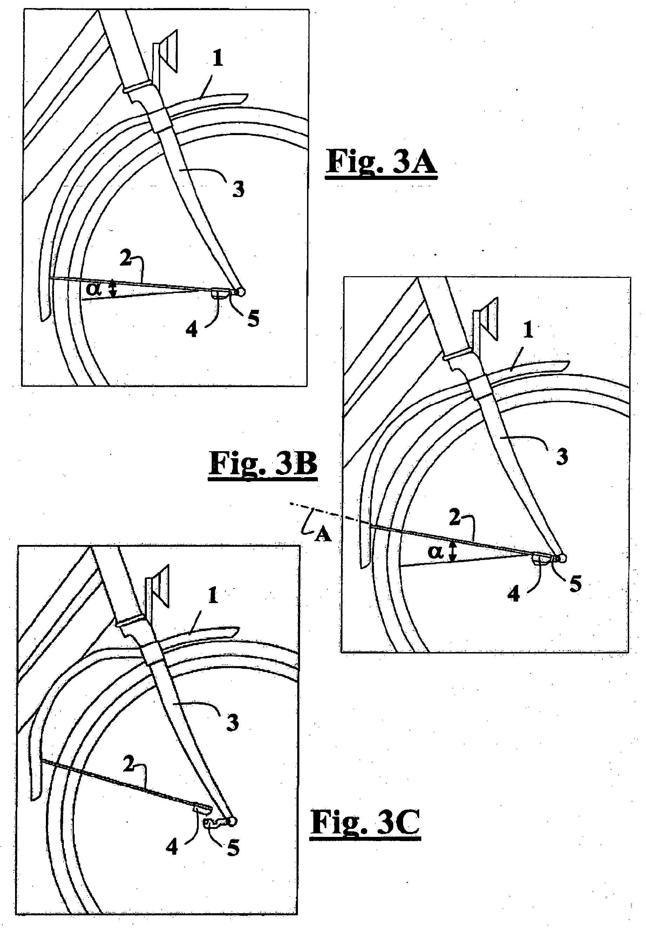

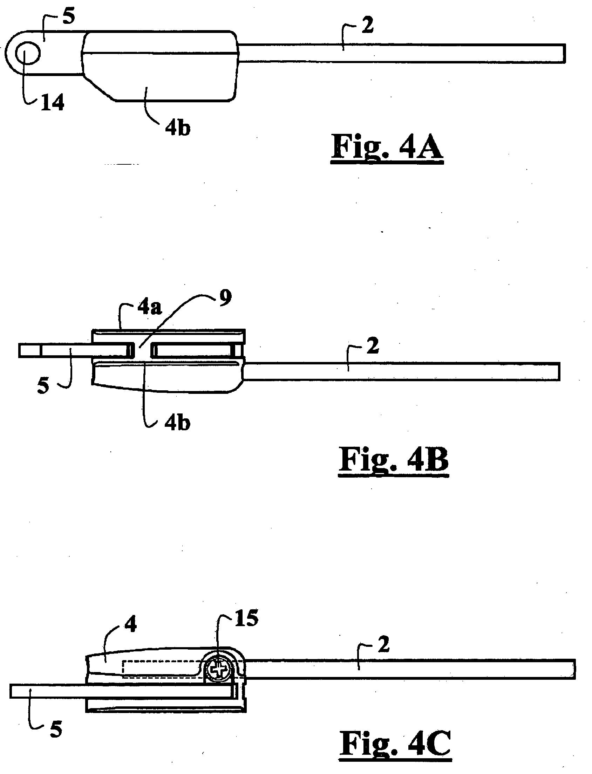

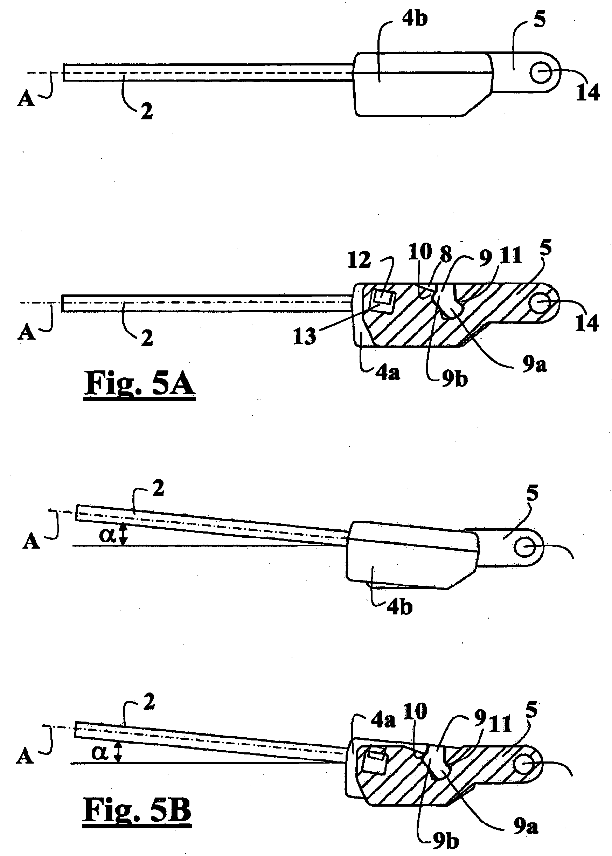

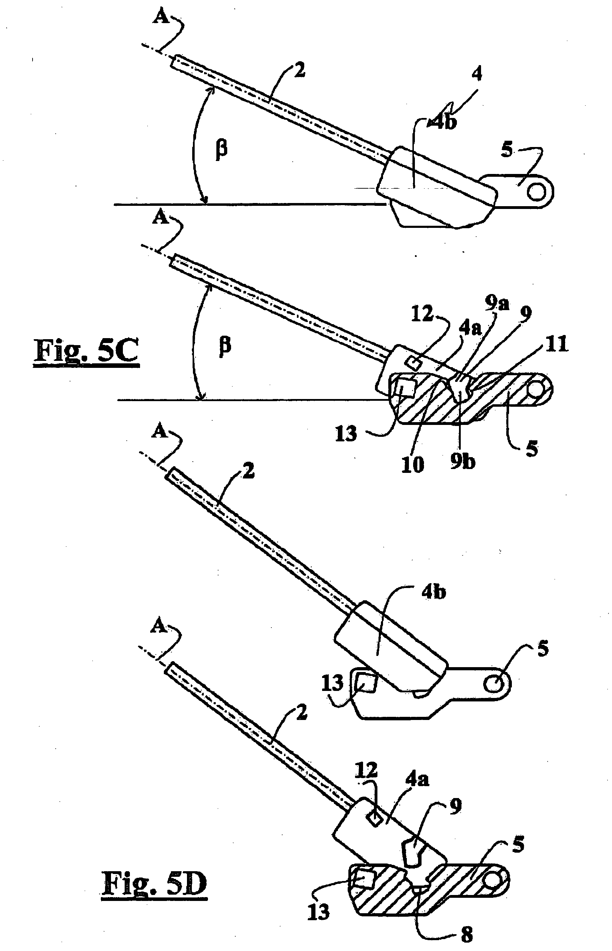

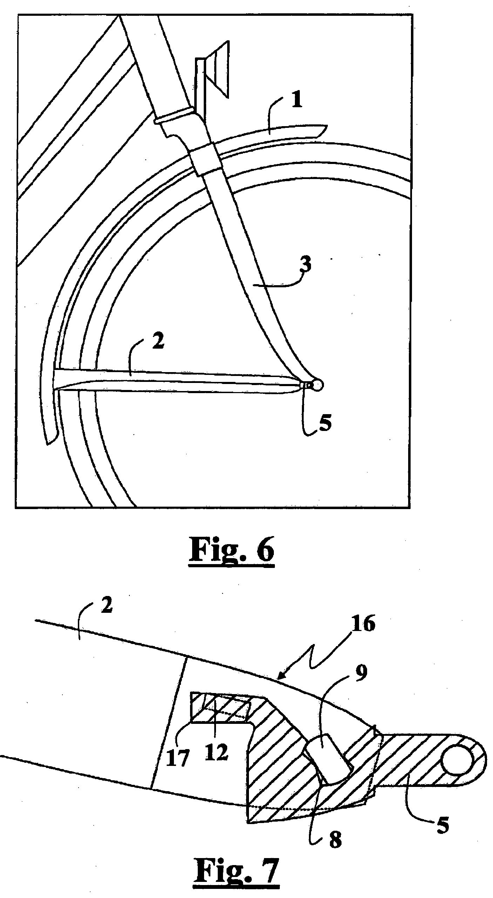

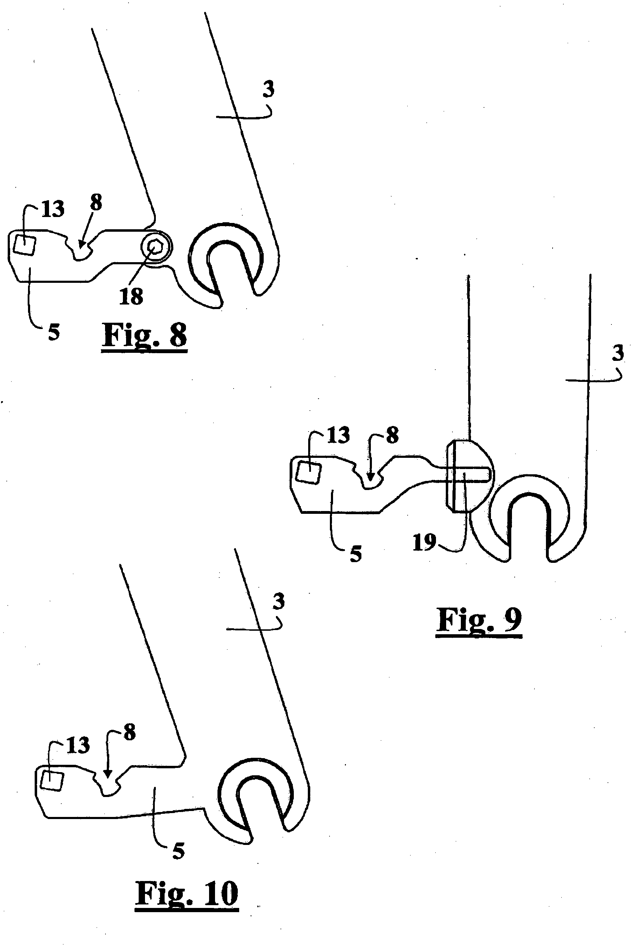

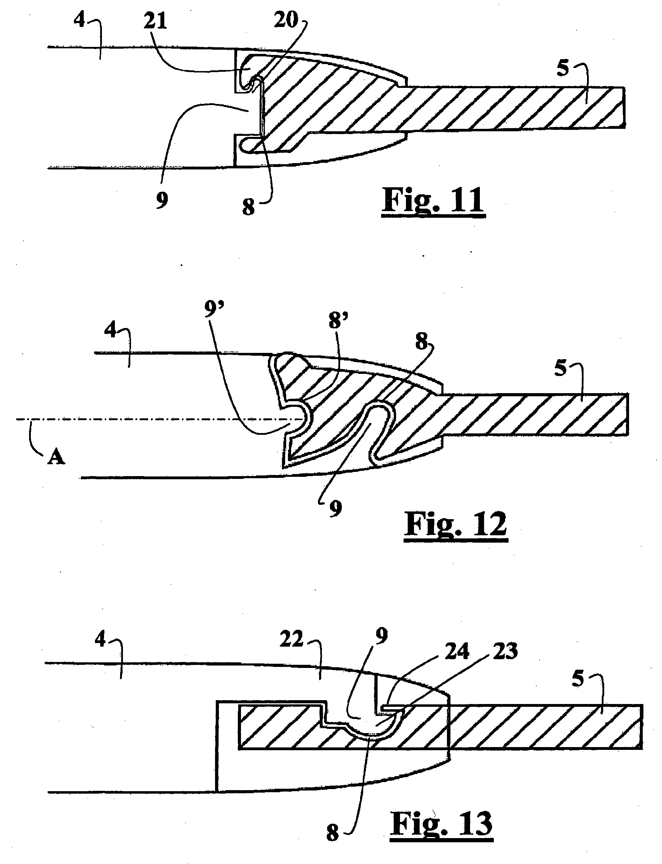

In this description, reference numerals are used to refer to the attached drawings, in which identical or similar parts are denoted by the same reference numerals, and in which:
▪ Fig. 1 shows a side view of a bicycle with a front mudguard, the supporting rods of which are connected to the fork of the bicycle by means of a safety connection device according to the present invention;
▪ Fig. 2 shows an enlarged side view of the mudguard with safety connection device of the bicycle from Fig. 1;
▪ Figs. 3A, 3B and 3C show the mudguard with safety connection device at three successive points in time, respectively, during the deformation of the mudguard and the rotation and eventual detachment of the supporting mudguard rods, in order to illustrate the operation of the safety connection device;
▪ Figs. 4A, 4B and 4C show a mudguard rod which is provided with a safety connection device according to the present invention, with these figures showing a side view, a top view and a bottom view, respectively;
▪ Figs. 5A, 5B, 5C and 5D each show a side view and a vertical section of a mudguard rod which is connected to a fork element, with the figures successively showing the position of use (Fig. 5A), a position with the rods rotated with respect to one another through a small angle (α) (Fig. 5B), a position with the rods rotated with respect to one another up to the release angle (β) (Fig. 5C), and finally, an uncoupled state of the connected components (Fig. 5D);
▪ Fig. 6 shows a part of a bicycle with a front mudguard, the supporting rods of which are provided with integrated coupling means for forming the safety connection device;
▪ Fig. 7 shows a vertical cross section of the mudguard rod illustrated in Fig. 6 in connection with a fork element;
▪ Figs. 8 and 9 show a side view of a fork element attached to the fork which is provided with coupling means for forming the safety connection device, with the fork element in these figures being attached by means of a number of different attachment means;
▪ Fig. 10 shows a side view of a part of a bicycle fork which is provided with integrated coupling means for forming the safety connection device;
▪ Figs. 11, 12 and 13 each show a vertical cross section of a mudguard rod which is connected to a fork element, with the complementary coupling means on the one hand forming part of the mudguard rod and on the other hand forming part of the fork element;

The bicycle (6) represented in Fig. 1 comprises a mudguard (1) which extends opposite the front wheel and has an attachment point (7), where the mudguard (1) is connected to the fork (3) of the bicycle by known connecting means, and two supporting rods (2) which extend forwards on either side along the front wheel, preferably but not necessarily in the horizontal direction, and are connected to a respective bottom end of the fork (3).

The mudguard (1) and the supporting rods (2) are for example made from metal or from plastic or from a combination of metal and plastic. The mudguard rods (2) are connected to the fork (3) by means of a safety connector (4), (5).

The safety connection device (see Fig. 2) consists of two connecting means (4) and (5) which can be coupled and form part of or are fixedly connected to the mudguard rod (2) and the fork (3), respectively. The connecting means (5) which is attached to the fork (3) or forms part of the fork (3) is indicated below by the term 'fork element'. The connecting means (4) which is attached to the mudguard rod (2) or forms part of the mudguard rod (2) is indicated below by the term 'rod element'.

The fork element (5) (see also Figs. 5A-5D, Fig. 7, Figs. 11-13 and Figs. 8-10) consists of a plate-like element with a top edge which is provided with at least one recess (8), and also of a securing eye (14) for attachment of the fork element (5) to the fork or another component fixed to the frame. The rod element (4) comprises a coupling body (9) having a shape which complements the shape of the recess (8). The coupling body (9) can be placed in the recess (8) and be retained therein.

The location, shape and dimensions of the recess (8) and the coupling body (9) are such that the coupling body (9) has to be rotated in order to be able to place it in the recess (8) of the fork element (3), and to be able to remove it from this recess (8) again. The coupling body (9) has to be hooked into the recess (8), as it were, by carrying out a rotary movement, and can only be removed from the latter by carrying out the reverse rotary movement.

To this end, the recess (8) and the coupling body (9) are formed such that one or several wall sections (10), (11) of the recess (8) on the one hand prevent the coupling body (9) introduced therein from being removed from the recess (8) according to a direction at right angles to the axis (A) of the supporting rod (2), and on the other hand also prevent the coupling body (9) from being displaced according to the direction of this axis (A).

The coupling body (9) is designed in the shape of a foot with a tip part (9a) and a heel part (9b). The displacements of the coupling body (9) mentioned above are prevented by the fact that the recess comprises wall sections (10), (11) which on the one hand retain the tip part (9a) and the heel part (9b) in the direction of the axis (A), and on the other hand also extend above this tip part (9a) and this heel part (9b), as long as the mutual rotation angle of the coupling body (9) and the recess (8) is smaller than the release angle (β).

As can best be seen in Figs. 4A-4C and 5A-5D, the rod element (4) comprises two parallel flank sections (4a), (4b) with an intermediate space, with the above-described coupling body (9) being provided in this intermediate space. The fork element (5) extends between the flank sections (4a), (4b) and when the connecting means have been coupled to one another (Figs. 5A-5C), the coupling body (9) is accommodated in the recess (8) of the fork element (5).

One of the flank sections (4a) has a laterally extending blocking member (12) on its inner side (the side facing the other flank section (4b)). The fork element (3) is provided with a corresponding blocking aperture (13) which is placed such that the blocking member (12) is situated in this blocking aperture (13) if the rod element (4) and the fork element (5) are in the position of use (Fig. 5A). As a result thereof, the connection is blocked in the position of use. Before the mudguard rod (2) can start to rotate, the top edge of the blocking member (12) has to be moved past the top edge of the blocking aperture (13). Thus, the moment of force which is exerted on the rod (2) first has to be sufficiently great to overcome this resistance.

In the position of use, as is illustrated in Figs. 2 and 5A, the connecting means extend according to the axis (A) of the mudguard rod (2). In this position of use, the mudguard rods (2) extend on either side along the front wheel, preferably but not necessarily in the horizontal direction.

Upon a small rotation of the mudguard rod (2) through an angle (α), the position of Fig. 5B is reached. The blocking member (12) has left the blocking aperture (13). The coupling body (9) has been rotated into the recess (8), but this rotation is not sufficient to release the connection, since the wall sections (10), (11) are still above the tip part (9a) and the heel part (9b) of the coupling body (9).

After a further rotation of the mudguard rod (2), the position shown in Fig. 5C is reached. The coupling body (9) is now in the position in which it can leave the recess (8). In this position, the mudguard rod (2) is rotated with respect to the position of use (Fig. 5A) through a certain rotation angle (β) which is referred to in the present patent application by the term 'release angle (β)'. In this position, the connection is released and the mudguard rod (2) can be displaced with respect to the fork element (5), so that the coupling body (9) can be moved out of the recess (8).

Fig. 5D shows the situation in which the mudguard rod (2) has co-rotated further with the wheel and has also been moved over a small distance, so that the coupling body (9) is removed from the recess (8).

When an object ends up between the tyre and the mudguard or between a supporting mudguard rod and the spokes, the mudguard rods will co-rotate with the wheel and the mudguard will be deformed. Figs. 3A to 3C show successive views of a mudguard which has a safety connection device and is fitted to a bicycle when such a situation occurs. In this case, the safety connection device moves through the successive phases which are illustrated in Figs. 5B, 5C and 5D.

With a small rotation of the mudguard rod (2) through an angle (α), the position in Fig. 3A is reached. The entrained object has exerted a moment of force on the mudguard rod (2) which is sufficiently great for the blocking member (12) to leave the blocking aperture (13). The coupling body (9) has been rotated in the recess (8), but the rotation angle (α) is not sufficiently large to release the connection.

After further rotation of the mudguard rod (2), the position in Fig. 3B is reached. In this position, the mudguard rod (2) is rotated with respect to the position of use through a certain rotation angle, the release angle (β). As a result thereof, the mudguard (2) has experienced further deformation. The coupling body (9) is now in the position in which it can leave the recess (8). In this position, the connection is released and the mudguard rod (2) can be displaced so that the coupling body (9) can be moved out of the recess (8).

Fig. 3C shows the situation in which the mudguard rod (2) has co-rotated further with the wheel and the mudguard (2) is even more deformed. The rod (2) has been displaced over a small distance with respect to the fork element (5), so that the coupling body (9) is removed from the recess (8). Consequently, the entrained object can be released, as a result of which the wheel can continue to rotate without being blocked.

In Figs. 4A, 4B and 4C, a mudguard rod (2) is illustrated which is provided with a safety connection device consisting of a fork element (5) which is provided with a securing eye (14) in order to attach it to the fork (3) of the bicycle, and a rod element (4) which is attached to the supporting rod (2) by means of a screw (15).

The attachment of the mudguard rod (2) is preferably designed such that this rod (2) is adjustable according to its longitudinal direction. This allows adjustment of the distance between the mudguard (1) and the attachment point of the mudguard rod (2), so that the distance between the mudguard (1) and the tyre can be adjusted. As a result thereof, it also becomes possible to use the same type of mudguard for different bicycle geometries.

Such an adjustable attachment of the mudguard rod (2) can be achieved by means of the abovementioned screw (15). To this end, a passage is provided in the rod element (4) which allows the mudguard rod (2) to be displaced to and fro in the rod element (4). By means of the screw (15), the rod (2) is fixed in the desired position.

The rod element (4) is designed with two parallel flank sections (4a), (4b) with an intermediate space and a coupling body (9) which is accommodated in this intermediate space, as has been indicated above. The fork element (5) extends between the flank sections (4a), (4b) while the coupling body (9) is accommodated in the recess of the fork element (5).

The rod element (4) does not necessarily have to be provided as a separate component, but can also form part of the mudguard rod (2). Fig. 6 shows a mudguard with such a safety connection device which is installed on a bicycle. The rod element (4) is incorporated in the mudguard rod (2). This means that the mudguard rod (2) comprises an end part (16) with a coupling body (9) which is designed to be placed and retained in a recess (8) of a fork element (5). Obviously, the above-described features of the coupling body (9) and the recess (8) also have to be present here.

Furthermore (see Fig. 7), the end part (16) of the mudguard rod (2) also comprises a blocking member (12). Here, the fork element (5) does not comprise a blocking aperture, but a blocking arm (17) which is placed such that the blocking member (12) is situated below the bottom edge of this arm (17) when the rod element (4) and the fork element (5) are in the position of use. As a result thereof, the connection is blocked in the position of use. Before the mudguard rod (2) can start to rotate, the top edge of the blocking member (12) has to be moved past the bottom edge of the arm (17). Thus, the moment of force which is exerted on the supporting rod (2) first has to be sufficiently great to overcome this resistance.

The fork element (5) can be designed as a separate component which is releasably attached to the fork. In Fig. 8, this attachment is designed as a screw or bolt (18), while, in Fig. 9, the fork element (5) has a pin-shaped end (19) which is clamped into a corresponding opening of the fork (3). Obviously, various other attachment means can be considered for this purpose. Of course, this attachment may also be a permanent attachment, such as for example a welded joint or adhesive connection.

The fork element (5) can also form part of the fork (3), as illustrated in Fig. 10. To this end, an arm is provided in the vicinity of the bottom end of the fork (3), which arm extends horizontally towards the rear and acts as a fork element (5). In the top edge part of this arm, the above-described recess (8) is provided. This arm furthermore also comprises the abovementioned blocking aperture (13).

Finally, Figs. 11, 12 and 13 show a number of alternative embodiments of the connecting means (4), (5). In these three examples, the rod element (4) is incorporated in the mudguard rod (2). Such a rod element (4) can of course also be designed as a separate component which can be attached to a mudguard rod (2). The fork element (5) can in any case also form part of the fork (3) or be designed as a component which can be attached to the fork (3) or to another component fixed to the frame.

The embodiment from Fig. 11 comprises a rod element (4) and a fork element (5) in which a foot-shaped coupling body (9) and a complementary recess (8) are provided at the respective end sides which face one another. The tip (20) of this foot-shaped coupling body (9) ends up in the recess (8) in a top space which is delimited at the top by a wall of the recess (8) and is delimited at the front by a downwardly directed lip (21). As a result thereof, the coupling body (9) cannot be moved into and out of the recess (8), either in the horizontal direction, or in the vertical upward direction. The tip (20) of the foot-shaped coupling body (9) can only hook behind the lip (21) in the recess (8) by performing a rotary movement. A reverse rotary movement is required in order to remove the coupling body (9) out of the recess (8).

The embodiment of Fig. 12 comprises a rod element (4) with two coupling bodies (9), (9'). A first coupling body (9) runs from the level of the underside of the rod element (4) obliquely upwards, while a second coupling body (9') is provided on an end side which faces the fork element (5). The fork element (5) comprises complementary recesses (8), (8') in an end side facing the rod element (4) and in its underside, respectively. The shape, position and dimensions of the coupling bodies (9), (9') are such that a rotation of the fork element (5) and the rod element (4) with respect to one another is required in order to arrange the coupling bodies (9), (9') in their respective recesses (8), (8'). The cooperation between the second coupling body (9') and its recess (8') prevents the displacement of the rod element (4) and the fork element (5) with respect to one another in a direction at right angles to the axis (A). The displacement according to the axis (A) is prevented by the cooperation between the first coupling body (9) and its respective recess (8).

In the embodiment from Fig. 13, the rod element (4) comprises a foot-shaped coupling body (9) which extends downwards from a top edge (22) and can be arranged in a complementary recess (8) in the upper side of the fork element (5). A tip part (23) of this coupling body (9) has to end up on the right-hand side in the recess (8) in a space which is delimited at the top by a horizontal lip (24). The coupling body (9) which, in the recess (8), can hardly be moved in the horizontal direction, if at all, can therefore not be moved in the vertically upward direction into and out of the recess (8) either. The tip (23) of the foot-shaped coupling body (9) can only hook under the lip (24) in the recess (8) by performing a rotary movement. A reverse rotary movement is required in order to remove the coupling body (9) from the recess (8).

It is obvious that for all embodiments where the coupling body (9) and the recess (8) are provided on the rod element (4) and on the fork element (5), respectively, this coupling body (9) and this recess (8) can be exchanged, so that the coupling body (9) is provided on the fork element (5) and the recess (8) is provided on the rod element (4). The blocking member (12) and the blocking aperture (13) or arm (17) which, in the above examples form part of the rod element (4) and the fork element (5), respectively, can easily be exchanged.

## Claims

1. Safety connection device comprising at least one supporting rod (2) for a bicycle mudguard (1), a first connecting means (4) forming part of or being fixedly attached to said supporting rod (2), and a second connecting means (5) which forms part of or can be fixedly attached to a fixed component (3) of the bicycle (6), said first (4) and second connecting means (4), (5) being releasably connectable to one another such that the connection is automatically released when a force is exerted on the supporting rod, and being rotatable with respect to one another in the connected state, **characterized in that** the connected connecting means (4), (5) are non-releasably connected in a position of use and in each position which is rotated with respect to this position of use in which the connecting means (4), (5) are rotated with respect to one another through an angle (α) which is smaller than a certain release angle (β), and **in that** their connection is released automatically if the connecting means (4), (5) are rotated with respect to one another through an angle which is at least equal to this release angle (β), when the connection device is in use on a bicycle and an object ends up between the tyre and the mudguard or between a mudguard rod and the spokes and is entrained by the tyre or the wheel.

2. Safety connection device according to claim 1, **characterized in that** the connecting means (4), (5) form a pivoting knee joint when the connecting means (4), (5) are in the connected state.

3. Safety connection device according to claim 2, **characterized in that** the connected connecting means (4), (5) can only be rotated about an axis of rotation which is at right angles to the axis (A) of the supporting rod (2).

4. Safety connection device according to claims 2 or 3, **characterized in that** the one connecting means (4), (5) comprises a coupling body (9), while the other connecting means (5), (4) comprises a recess (8) in which the coupling body (9) can be accommodated and can be retained, and **in that** the coupling body (9) and the recess (8) are designed such that they have to be rotated with respect to one another in one direction of rotation in order to be able to place the coupling body (9) in the recess (8), and **in that** they have to be rotated with respect to one another in the other direction of rotation in order to remove the coupling body (9) from this recess (8) again.

5. Safety connection device according to claim 4, **characterized in that** the recess (8) and the coupling body (9) are formed such that at least one wall section (10), (11) of the recess (8) on the one hand prevents the coupling body (9) introduced therein from being removed from the recess (8) according to a direction at right angles to the axis (A) of the rod (2), and on the other hand prevents the coupling body (9) from being displaced according to the direction of this axis (A).

6. Safety connection device according to claim 4 or 5, **characterized in that** the one connecting means (4) comprises two parallel flank sections (4a), (4b) with an intermediate space which accommodates the coupling body (9), **in that** the other connecting means (5) extends inside this intermediate space, and **in that** the coupling body (9) is accommodated in the recess (8) of this other connecting means (5).

7. Safety connection device according to one of the preceding claims, **characterized in that** the connecting means (4), (5) are provided with blocking means (12), (13) in order to prevent rotation of the connecting means (4), (5) with respect to one another in their position of use and in order to allow this rotation only when the moment of force applied to the connecting means has exceeded a certain threshold value.

8. Safety connection device according to one of the preceding claims, **characterized in that** said fixed component (3) is a front fork of a bicycle.

9. Mudguard for a bicycle, comprising a mudguard body, **characterized in that** the mudguard comprises a safety connection device according to any of the preceding claims.

10. Bicycle comprising a mudguard, **characterized in that** the supporting rod (2) is connected to a fixed component of the bicycle by means of a safety connection device according to any of claims 1 to 8.

## Patentansprüche

1. Sicherheitsverbindungsvorrichtung, die mindestens eine Trägerstange (2) für einen Fahrradschmutzabweiser (1), ein erstes Verbindungsmittel (4), das einen Teil der Trägerstange (2) bildet oder an dieser feststehend befestigt ist, und ein zweites Verbindungsmittel (5), das einen Teil einer feststehenden Komponente (3) des Fahrrads (6) bildet oder daran feststehend befestigt werden kann, umfasst, wobei das erste (4) und das zweite Verbindungsmittel (4), (5) derart lösbar miteinander verbunden werden können, dass die Verbindung automatisch gelöst wird, wenn eine Kraft auf die Trägerstange ausgeübt wird, und im verbundenen Zustand in Bezug aufeinander drehbar sind, **dadurch gekennzeichnet, dass** die verbundenen Verbindungsmittel (4), (5) in einer Nutzstellung und in jeder Stellung, die in Bezug auf die Nutzstellung gedreht ist, in der die Verbindungsmittel (4), (5) in Bezug aufeinander um einen Winkel (α) gedreht sind, der kleiner als ein bestimmter Lösungswinkel (β) ist, nicht lösbar verbunden sind und dass ihre Verbindung automatisch gelöst wird, wenn die Verbindungsmittel (4), (5) in Bezug aufeinander um einen Winkel gedreht sind, der mindestens gleich diesem Lösungswinkel (β) ist, wenn die Verbindungsvorrichtung an einem Fahrrad verwendet wird und ein Gegenstand zwischen den Reifen und den Schmutzabweiser oder zwischen eine Schmutzabweiserstange und die Speichen gerät und durch den Reifen oder durch das Rad mitgeschleift wird.

2. Sicherheitsverbindungsvorrichtung nach Anspruch 1, **dadurch gekennzeichnet, dass** die Verbindungsmittel (4), (5) ein sich drehendes Kniegelenk bilden, wenn sich die Verbindungsmittel (4), (5) im verbundenen Zustand befinden.

3. Sicherheitsverbindungsvorrichtung nach Anspruch 2, **dadurch gekennzeichnet, dass** die verbundenen Verbindungsmittel (4), (5) nur um eine Drehachse gedreht werden können, die im rechten Winkel zur Achse (A) der Trägerstange (2) steht.

4. Sicherheitsverbindungsvorrichtung nach Anspruch 2 oder 3, **dadurch gekennzeichnet, dass** das eine Verbindungsmittel (4), (5) einen Kopplungskörper (9) umfasst, während das andere Verbindungsmittel (5), (4) eine Vertiefung (8) umfasst, in der der Kopplungskörper (9) aufgenommen werden und zurückgehalten werden kann, und dass der Kopplungskörper (9) und die Vertiefung (8) derart konstruiert sind, dass sie in Bezug aufeinander in einer Drehrichtung gedreht werden müssen, um den Kopplungskörper (9) in der Vertiefung (8) zu platzieren, und dass sie in Bezug aufeinander in der anderen Drehrichtung gedreht werden müssen, um den Kopplungskörper (9) wieder aus dieser Vertiefung (8) zu entfernen.

5. Sicherheitsverbindungsvorrichtung nach Anspruch 4, **dadurch gekennzeichnet, dass** die Vertiefung (8) und der Kopplungskörper (9) derart ausgebildet sind, dass mindestens ein Wandabschnitt (10), (11) der Vertiefung (8) einerseits verhindert, dass der darin eingefügte "Kopplungskörper (9) aus der Vertiefung (8)", in einer Richtung im rechten Winkel zur Achse (A) der Stange (2) entfernt wird, und andererseits verhindert, dass der Kopplungskörper (9) in Richtung dieser Achse (A) verschoben wird.

6. Sicherheitsverbindungsvorrichtung nach Anspruch 4 oder 5, **dadurch gekennzeichnet, dass** das eine Verbindungsmittel (4) zwei parallele Flankenabschnitte (4a), (4b) mit einem Zwischenraum, der den Kopplungskörper (9) aufnimmt, umfasst, dass sich das andere Verbindungsmittel (5) innerhalb dieses Zwischenraums erstreckt und dass der Kopplungskörper (9) in der Vertiefung (8) dieses anderen Verbindungsmittels (5) aufgenommen wird.

7. Sicherheitsverbindungsvorrichtung nach einem der vorhergehenden Ansprüche, **dadurch gekennzeichnet, dass** die Verbindungsmittel (4), (5) mit Sperrmitteln (12), (13) versehen sind, um die Drehung der Verbindungsmittel (4), (5) in Bezug aufeinander in ihrer Nutzstellung zu verhindern und um diese Drehung nur zu erlauben, wenn das Kraftmoment, das auf die Verbindungsmittel ausgeübt wird, einen bestimmten Schwellenwert überschritten hat.

8. Sicherheitsverbindungsvorrichtung nach einem der vorhergehenden Ansprüche, **dadurch gekennzeichnet, dass** die feststehende Komponente (3) eine Vordergabel eines Fahrrads ist.

9. Schmutzabweiser für ein Fahrrad, der einen Schmutzabweiserkörper umfasst, **dadurch gekennzeichnet, dass** der Schmutzabweiser eine Sicherheitsverbindungsvorrichtung nach einem der vorhergehenden Ansprüche umfasst.

10. Fahrrad, das einen Schmutzabweiser umfasst, **dadurch gekennzeichnet, dass** die Trägerstange (2) mittels einer Sicherheitsverbindungsvorrichtung nach einem der Ansprüche 1 bis 8 mit einer feststehenden Komponente des Fahrrads verbunden ist.

## Revendications

1. Dispositif de fixation de sécurité comprenant au moins une tige de soutien (2) pour un garde-boue (1) de bicyclette, un premier moyen (4) de fixation, faisant partie de ladite tige de soutien (2) ou lui étant fixé à demeure, et un second moyen (5) de fixation, qui fait partie d'un composant fixe (3) de la bicyclette (6) ou peut lui être fixé à demeure, lesdits premier (4) et second moyens de fixation (4), (5) pouvant être raccordés amovibles l'un à l'autre de telle sorte que la fixation se libère automatiquement quand une force s'exerce sur la tige de soutien et pouvant tourner l'un par rapport à l'autre quand ils sont en situation de raccordement,
**caractérisé en ce que** les moyens de fixation (4), (5) raccordés sont raccordés non amovibles dans une position d'utilisation et dans chaque position obtenue par rotation par rapport à cette position d'utilisation dans lesquelles les moyens de fixation (4), (5) sont mis en rotation l'un par rapport à l'autre d'un angle (α) qui est inférieur à un certain angle de débrayage (β), et **en ce que** leur raccordement se libère automatiquement si les moyens de fixation (4), (5) sont mis en rotation l'un par rapport à l'autre d'un angle qui est supérieur ou égal à cet angle de débrayage (β), quand le dispositif de fixation est en service sur une bicyclette et qu'un objet finit entre le pneu et le garde-boue ou entre la tige de garde-boue et les rayons et est entraîné par le pneu ou la roue.

2. Dispositif de fixation de sécurité selon la revendication 1, **caractérisé en ce que** les moyens de fixation (4), (5) constituent un joint articulé pivotant quand ils sont en situation de raccordement.

3. Dispositif de fixation de sécurité selon la revendication 2, **caractérisé en ce que** l'on ne peut faire tourner les moyens de fixation (4), (5) raccordés qu'autour d'un axe de rotation qui est à angle droit avec l'axe (A) de la tige de soutien (2).

4. Dispositif de fixation de sécurité selon la revendication 2 ou 3, **caractérisé en ce que** l'un des moyens de fixation (4), (5) comprend un élément d'accouplement (9), tandis que l'autre des moyens de fixation (5), (4) comprend un évidement (8), dans lequel l'élément d'accouplement (9) peut se loger et être retenu, et **en ce que** l'élément d'accouplement (9) et l'évidement (8) sont conçus de telle sorte qu'on doive les faire tourner l'un par rapport à l'autre dans un sens de rotation afin de pouvoir placer l'élément d'accouplement (9) dans l'évidement (8), et **en ce qu'**il faille les faire tourner l'un par rapport à l'autre dans l'autre sens de rotation afin de retirer à nouveau l'élément d'accouplement (9) de l'évidement (8).

5. Dispositif de fixation de sécurité selon la revendication 4, **caractérisé en ce que** l'évidement (8) et l'élément d'accouplement (9) sont constitués de telle sorte qu'au moins une section de paroi (10), (11) de l'évidement (8) d'une part empêche l'élément d'accouplement (9) introduit dans l'évidement (8) d'en être retiré suivant une direction à angle droit avec l'axe (A) de la tige (2), et d'autre part empêche l'élément d'accouplement (9) d'être déplacé suivant la direction de cet axe (A).

6. Dispositif de fixation de sécurité selon la revendication 4 ou 5, **caractérisé en ce que** l'un des moyens de fixation (4) comprend deux sections de flanc (4a), (4b) parallèles avec un espace intermédiaire qui accueille l'élément d'accouplement (9), **en ce que** l'autre moyen de fixation (5) pénètre dans cet espace intermédiaire, et **en ce que** l'élément d'accouplement (9) se loge dans l'évidement (8) de cet autre moyen de fixation (5).

7. Dispositif de fixation de sécurité selon l'une quelconque des revendications précédentes, **caractérisé en ce que** les moyens de fixation (4), (5) sont pourvus de moyens de blocage (12), (13) afin d'empêcher la rotation des moyens de fixation (4), (5) l'un par rapport à l'autre dans leur position d'utilisation et afin de ne permettre cette rotation que quand le moment de force appliqué aux moyens de fixation a dépassé une certaine valeur seuil.

8. Dispositif de fixation de sécurité selon l'une quelconque des revendications précédentes, **caractérisé en ce que** ledit composant fixe (3) est la fourche avant d'une bicyclette.

9. Garde-boue pour bicyclette, comprenant un corps de garde-boue, **caractérisé en ce que** le garde-boue comprend un dispositif de fixation de sécurité selon l'une quelconque des revendications précédentes.

10. Bicyclette comprenant un garde-boue, **caractérisée en ce que** la tige de soutien (2) est raccordée à un composant fixe de la bicyclette au moyen d'un dispositif de fixation de sécurité selon l'une quelconque des revendications 1 à 8.
